# EUROPÄISCHE PATENTSCHRIFT

(11) **EP 0 390 955 B1**
(45) Veröffentlichungstag und Bekanntmachung des Hinweises auf die Patenterteilung: **08.09.1993**
(21) Anmeldenummer: 89106180.6
(22) Anmeldetag: 07.04.1989
(51) Int. Cl.: A61C 17/02

(54) **Zahnärztliche Mundspülglasfülleinrichtung**
Dentist's mouth rinse glass filling device
Dispositif dentaire de remplissage de récipients

(43) Veröffentlichungstag der Anmeldung: 10.10.1990
(73) Patentinhaber: SIEMENS AKTIENGESELLSCHAFT, 80333 München (DE)
(72) Erfinder: Kissel, Heinz, Ing.grad., D-6140 Bensheim (DE); Gropp, Heinrich, Dipl.-Ing., D-6834 Ketsch (DE)

(56) Entgegenhaltungen:
- FR-A- 2 509 168
- GB-A- 2 101 088
- GB-A- 2 146 140

## Beschreibung

Zum Füllen von Mundspülgläsern in der zahnärztlichen Praxis sind sowohl mechanische als auch elektrische Lösungen bekannt. Bei den bekannten elektrischen Lösungen wird mittels eines einstellbaren Zeitgliedes, z.B., mit Hilfe eines Potentiometers, die Fülldauer und damit der Füllgrad festgelegt. Mit einer solchen Fülleinrichtung ist es nicht möglich, gezielt bestimmte Füllstandshöhen im Mundspülglas exakt einzustellen. Bereits das werkseitige Einstellen und Abstimmen der Füllmenge auf einen bestimmten Bechertyp ist relativ zeitintensiv. Ein weiterer wesentlicher Nachteil ist, daß infolge des zwar werkseitig einstellbaren, jedoch während des Füllens des Mundspülglases nicht unterbrechbaren Füllvorganges keine Möglichkeit besteht, in den Füllvorgang regulierend einzugreifen, was z.B. erwünscht ist, um einen noch teilweise gefüllten Becher mit einer bestimmten Flüssigkeitsmenge aufzufüllen. Auch bei einem Wechsel der Bechergröße ist ein Neueinstellen der Füllmenge umständlich und meist nur unter Zuhilfenahme eines Servicetechnikers möglich. Nachdem das Zeitglied (Potentiometer) in der Regel aus technischen Gründen nicht ohne weiteres im unmittelbaren Bedienbereicht von Arzt und Helferin angeordnet werden kann, ist auch eine Veränderung am Potentiometer nicht ohne weiteres und schon gar nicht während einer Behandlung möglich.

Der im Anspruch 1 angegebenen Erfindung liegt die Aufgabe zugrunde, demgegenüber eine Verbesserung zu erzielen, insbesondere eine Vereinfachung in der Einstellung und Bedienung sowie eine bessere Einstellgenauigkeit anzustreben.

Ein wesentlicher Vorzug der Erfindung ist, daß nur ein einziges Betätigungselement vorhanden ist, mit dem sowohl die Füllzeit vorprogrammierbar, als auch der einprogrammierte Wert jederzeit abrufbar ist, und mit dem auch der Füllvorgang jederzeit unterbrochen werden kann. Mit der erfindungsgemäßen Einrichtung ist es möglich, sämtliche Funktionen von beliebiger Stelle am Gerät, sei es am Arzt- und/oder am Helferinnengerät, mit einem einzigen Betätigungselement auszulösen.

Ein Ausführungsbeispiel der Erfindung wird nachfolgend anhand der Zeichnung näher erläutert. Es zeigen:
- FIG 1: eine schematische Darstellung der erfindungsgemäßen Fülleinrichtung und
- FIG 2 bis 4: Zeitablauf-Diagramme für Tastenbetätigung des Betätigungselementes, Ventilsteuerung und Funktionsanzeige.

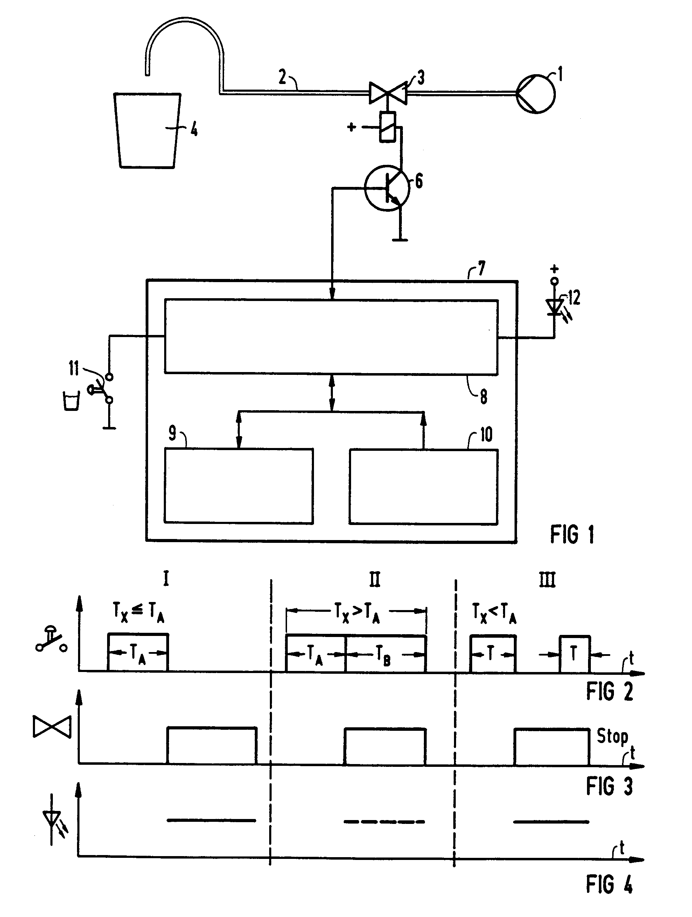

Die FIG 1 zeigt in einer schematischen Darstellung die wesentlichen Teile der erfindungsgemäßen Mundspülglas-Fülleinrichtung.

Von einer Druckwasserquelle 1 führt eine Leitung 2 unter Zwischenschaltung eines Ventiles 3 zu einem Mundspülglas 4, welches, wie nachfolgend noch näher erläutert, mit einer frei wählbaren Flüssigkeitsmenge gefüllt bzw. nachgefüllt werden kann. Das den Zulauf in das Mundspülglas 4 steuernde Ventil ist ein Magnetventil, welches mittels eines Steuergliedes 6 ein- und ausgeschaltet wird. Die Ansteuerung des Steuergliedes 6 erfolgt über eine allgemein mit 7 bezeichnete Steuereinheit, welche einen Mikroprozessor 8, einen nichtflüchtigen Speicher 9 (ZPRAM) und einen Programmspeicher 10 (ROM) enthält.

Eine an beliebiger Stelle des zahnärztlichen Gerätes, welches mit einer Mundspülglas-Fülleinrichtung versehen werden soll, angeordnete Taste 11 aktiviert, wie nachfolgend noch näher erläutert, den Mikroprozessor. Eine ebenfalls an beliebiger Stelle des Gerätes anzuordnende Anzeigeleuchte 12 in Form einer LED ist ebenfalls mit dem Mikroprozessor der Steuereinheit 7 verbunden.

Der nichtflüchtige Speicher 9 enthält sämtliche Daten über den Füllstand bzw. über die Betätigungszeit zur Erreichung eines bestimmten Füllstandes. Der Programmspeicher 10 enthält das erforderliche Ablaufprogramm mit der nachfolgend noch näher erläuterten, vorgegebenen Zeit T_{A}.

Anhand der FIG 2 bis 4, welche einander zugeordnete Zeitdiagramme für die Aktivierung der Betätigungstaste 11 (FIG 2), des Magnetventiles 3 (FIG 3) sowie des Anzeigeelementes 12 (FIG 4) zeigen, wird die Wirkungs- und Funktionsweise der erfindungsgemäßen Fülleinrichtung näher erläutert. Die Diagramme sind in drei Funktionsblöcke I bis III unterteilt, anhand derer die mit der erfindungsgemäßen Einrichtung anwählbaren Funktionen "Füllen", "Programmieren der Füllhöhe", "Korrektur der Füllhöhe" aufgezeigt werden sollen.

Es wird vorausgesetzt, daß eine bestimmte vorgegebene Zeit für die Betätigung der Taste 11, im Diagramm gemäß FIG 2 mit T_{A} bezeichnet, werksseitig festgelegt ist, wobei bei Unter- oder Überschreiten dieser vorgegebenen Betätigungszeit unterschiedliche Funktionen ausgelöst werden. Diese vorgegebene Zeit T_{A} liegt zweckmäßigerweise zwischen einer und drei Sekunden, vorzugsweise bei zwei Sekunden.

Anhand des Funktionsblockes I wird zunächst der Vorgang des Füllens des Mundspülglases 4 mit einem vorher abgespeicherten Wert erläutert.

Wird die Betätigungstaste 11 gedrückt, wird zunächst die Betätigungszeit vom Mikroprozessor 8 erfaßt und mit der vorgegebenen Zeit T_{A}, im Anwendungsbeispiel zwei Sekunden, verglichen. Ist die Betätigungszeit T_{X} kleiner oder gleich der vorgegebenen Zeit T_{A}, wird am Anzeigelement 12 ein optisches oder auch akustisches Signal ausgelöst; im vorliegenden Anwendungsfall gibt eine LED 12, ein Dauerleuchtsignal, wie in FIG 4 mit durchgehender Linie angedeutet. Gleichzeitig wird, wie aus dem Diagramm gemäß FIG 3 ersichtlich, das Magnetventil 3 aktiviert, wodurch die Wasserzufuhr über die Leitung 2 zum Mundspülglas 4 freigegeben wird.

Im danebenliegenden zweiten Funktionsblock (II) ist der Aktivierungsablauf für den Fall gezeigt, bei der die Betätigungszeit T_{X} um den Betrag T_{B} größer ist als T_{A}. Wird in diesem Fall die Taste 11 länger als T_{A} gedrückt, so wird ebenfalls das Magnetventil 3 betätigt, der sich ergebende Betätigungszeitwert abgespeichert, wobei das Anzeigeelement 12 nicht leuchtet, sondern blinkt (gestrichelte Darstellung in FIG 4). Dieses Blinken signalisiert, daß der neue, über T_{A} liegende Zeitwert T_{B} abgespeichert wird.

Wird anschließend, wie im Funktionszeitdiagrammblock III dargestellt, die Taste 11 mit einer Zeit T_{X} betätigt, die kleiner ist als die vorgegebene Zeit T_{A}, so wird der vorher einprogrammierte Wert abgerufen und das Ventil 3 aktiviert, falls es zuvor inaktiv war. Die Wasserzufuhr ist sodann frei, wodurch entweder ein leeres Mundspülglas auf dem programmierten Füllstandswert gefüllt oder der Füllstand korrigiert werden kann. In letzterem Fall kann durch erneutes Betätigen der Taste 11 mit einer Betätigungszeit T_{X1}, die ebenfalls kleiner ist als der vorgegebene Wert T_{A}, das Ventil 3 inaktiviert und damit die Wasserzufuhr gestoppt werden.

Um sicherzustellen, daß bei versehentlicher Dauerbetätigung der Taste 11 ununterbrochen Wasser in das Mundspülglas fließt, ist im Speicher 10 noch ein weiterer maximaler Zeitwert Tₘₐₓ eingespeichert, der bei Erreichen die Wasserzufuhr abschaltet. Dieser Zeitwert Tₘₐₓ beträgt ein Vielfaches des vorgegebenen Zeitwertes T_{A} und liegt zweckmäßigerweise zwischen 20 und 30 sec.

## Patentansprüche

1. Mundspülglas-Fülleinrichtung für die zahnärztliche Praxis, mit einer Steuereinheit (7), welche
a) bei Betätigung eines Bedienelementes (11) deren Betätigungszeit (T_{X}) erfaßt und mit einer vorgegebenen Zeit (T_{A}) vergleicht,
b) bei Überschreiten der vorgegebenen Zeit (T_{X}> T_{A}) an einem Signalglied (12) ein optisches und/oder akustisches Signal abgißt und gleichzeitig ein Ventil (3) aktiviert, mit welchem die Zufuhr von Wasser zum Mundspülglas (4) gesteuert wird,
c) während oder nach Beendigung der Betätigung des Bedienelementes (11) die über der vorgegebenen Zeit (T_{A}) liegende Betätigungszeit (T_{B}) in einem Speicher (9) abspeichert,
d) bei erneuter Betätigung des Bedienelementes (11) mit gleicher oder unter der vorgegebenen Zeit (T_{A}) liegenden Betätigungszeit (T_{X} ≦T_{A}) den im Speicher abgelegten Wert (T_{B}) abruft und das Ventil (3) zur Wasserzufuhr für die abgespeicherte Zeit einschaltet oder nach erneuter Betätigung des Bedienelementes (11) mit einer unter der vorgegebenen Zeit (T_{A}) liegenden Betätigungszeit den Wasserzulauf sperrt, falls dieser bereits freigegeben ist.

2. Mundspülglas-Fülleinrichtung nach Anspruch 1, wobei die Steuereinheit (7) einen Mikroprozessor (8) und einen nichtflüchtigen Speicher (9) aufweist, welcher die Daten über die programmierbare Betätigungszeit (T_{B}) zur Bestimmung der Füllhöhe enthält, und daß weiterhin ein Programmspeicher (10) vorhanden ist, der das Steuerablaufprogramm enthält.

3. Mundspülglas-Fülleinrichtung nach Anspruch 1, bei der der Abruf der Werte am Anzeigeelement (12) durch ein Dauerleuchtsignal und der Programmiervorgang durch ein Blinksignal angezeigt wird.

4. Mundspülglas-Fülleinrichtung nach einem der Ansprüche 1 bis 3, wobei die vorgegebene Betätigungszeit (T_{A}) zwischen einer und drei Sekunden liegt, vorzugsweise zwei Sekunden beträgt.

5. Mundspülglas-Fülleinrichtung nach Anspruch 2, bei der im Speicher (10) eine weitere zusätzliche Betätigungszeit (Tₘₐₓ) gespeichert ist, welche bei Überschreiten den Wasserzulauf sperrt, wobei diese Betätigungszeit ein Vielfaches, vorzugsweise mehr als das Zehnfache der vorgegebenen Betätigungszeit (T_{A}), beträgt.

## Claims

1. A filling device for a mouth rinsing glass for dental practice with a control unit, which
a) when an operating element (11) is activated measures the operating time (T_{X}) thereof and compares this with a predetermined time (T_{A}),
b) when the predetermined time is exceeded (T_{X} > T_{A}), delivers an optical and/or acoustic signal to a signal element (12) and at the same time activates a valve (3) with which the supply of water to the mouth rinsing glass (4) is controlled,
c) during or at the end of the activation of the operating element (11) stores the operating time (T_{B}) lying above the predetermined time (T_{A}) in a memory (9),
d) with renewed activation of the operating element (11) with an operating time equal to or less than the predetermined time (T_{A}) (T_{X} ≦ T_{A}) retrieves the value (T_{B}) deposited in the memory and connects the water supply valve (3) for the stored time or after renewed activation of the operating element (11) with an operating time lying below the predetermined time (T_{A}) blocks the water supply, if the water supply is already released.

2. A filling device for a mouth rinsing glass according to claim 1, wherein the control unit (7) has a microprocessor (8) and a non-volatile memory (9) which contains the data about the programmable operating time (T_{B}) for determining the filling height and in that furthermore a programme memory (10) is present which contains the control operating cycle.

3. A filling device for a mouth rinsing glass according to claim 1, in which the retrieval of the values on the display element (12) is displayed by a continuous luminescent signal and the programming process by a flash signal.

4. A filling device for a mouth rinsing glass according to one of claims 1 to 3, wherein the predetermined operating time (T_{A}) lies between one and three seconds, preferably two seconds.

5. A filling device for a mouth rinsing glass according to claim 2, in which a further additional operating time (Tₘₐₓ) is stored in the memory (10) which blocks the supply of water if this is exceeded, wherein this operating time amounts to a multiple, preferably more than ten times, the predetermined operating time (T_{A}).

## Revendications

1. Dispositif de remplissage d'un verre utilisé pour se rincer la bouche, utilisable en dentisterie, comportant une unité de commande (7), qui
a) lors de l'actionnement d'un élément de commande (11), détecte la durée d'actionnement (T_{X}) de cet élément de commande et la compare à une durée prédéterminée (T_{A}),
b) lors du dépassement de la durée prédéterminée (T_{X} > T_{A}), envoie un signal optique et/ou acoustique à un circuit de transmission de signaux (12) et active simultanément une soupape (3), qui commande l'envoi d'eau au verre (4) utilisé pour se rincer la bouche est commandé,
c) pendant ou à la fin de l'actionnement de l'élément de commande (11), mémorise la durée d'actionnement (T_{B}), qui est supérieure à la durée prédéterminée (T_{A}), dans une mémoire (9),
d) lors d'un nouvel actionnement de l'élément de commande (11) avec une durée d'actionnement (T_{X} ≦ T_{A}) égale ou inférieure à la durée prédéterminée (T_{A}), appelle la valeur (T_{B}) mémorisée dans la mémoire et ouvre la soupape (3) pour l'envoi d'eau pendant la durée mémorisée ou, après un nouvel actionnement de l'élément de commande (11) avec une durée d'actionnement inférieure à la durée prédéterminée (T_{A}), bloque l'arrivée d'eau, dans le cas où cette dernière a déjà été ouverte.

2. Dispositif de remplissage d'un verre utilisé pour se rincer la bouche suivant la revendication 1, dans lequel l'unité de commande (7) comporte un microprocesseur (8) et une mémoire non volatile (9), qui contient les données concernant la durée d'actionnement programmable (T_{B}) pour déterminer la hauteur de remplissage, et qu'en outre il est prévu une mémoire de programme (10), qui contient le programme du cycle de commande.

3. Dispositif de remplissage d'un verre utilisé pour se rincer la bouche suivant la revendication 1, dans lequel l'appel des valeurs est affiché au niveau de l'élément d'affichage (12) par un signal lumineux continu, et que l'opération de programmation est affichée au moyen d'un signal clignotant.

4. Dispositif de remplissage d'un verre utilisé pour se rincer la bouche suivant l'une des revendications 1 à 3, dans lequel la durée d'actionnement prédéterminée (T_{A}) est comprise entre une et trois secondes et est égale de préférence à deux secondes.

5. Dispositif de remplissage d'un verre utilisé pour se rincer la bouche suivant la revendication 2, dans lequel, dans la mémoire (10), est mémorisée une autre durée d'actionnement supplémentaire (Tₘₐₓ), lors du dépassement de laquelle l'arrivée d'eau est fermée, cette durée d'actionnement étant égale à un multiple et de préférence à plus du décuple de la durée d'actionnement prédéterminée (T_{A}).
